Europäisches Patentamt

European Patent Office

Office européen des brevets

(11) Publication number: **0 224 956**
**A1**

# EUROPEAN PATENT APPLICATION

(21) Application number: 86202045.0

(22) Date of filing: 19.11.86

(51) Int. Cl.4: **H04N 1/40**

(30) Priority: 22.11.85 EP 85201936

(43) Date of publication of application:
**10.06.87 Bulletin 87/24**

(84) Designated Contracting States:
**BE DE FR GB**

(71) Applicant: **AGFA-GEVAERT naamloze**
**vennootschap**
**Septestraat 27**
**B-2510 Mortsel(BE)**

(72) Inventor: **Van Daele, Jean Alois**
**Van Den Reecklaan 35**
**B-2820 Bonheiden(BE)**
Inventor: **Zehetmaier, Thomas**
**Purfinger Strasse 3**
**D-8011 Neufarn(DE)**
Inventor: **Weinberger, Michael**
**Herdweg 10**
**D-8851 Buttenwiesen(DE)**
Inventor: **Stumpf, Friedrich**
**Hohenwaldeckstrasse 30**
**D-8 München 90(DE)**
Inventor: **Stahl, Werner**
**Ludwig-Thoma-Weg 2**
**D-8016 Heimstetten(DE)**

(54) **Improved image scanning and digitizing method and apparatus.**

(57) A method and an apparatus for obtaining an electrical representation of an image wherein each line of said image is repeatedly scanned with distinct irradiation amounts and wherein for each pixel an electrical representation is generated by adjusting the most accurate output value, which value corresponds with the image-wise modulated light obtained in a measurement cycle that provides optimal density resolution, by taking into account the irradiation amount during said measurement cycle. By means of the method and apparatus of the present invention the density resolving power of a given anti-blooming image sensor is improved and the light intensity detection range is extended.

fig. 2

## IMPROVED IMAGE SCANNING AND DIGITIZING METHOD AND APPARATUS

The present invention relates to a method and an apparatus for digitizing a body of image information, e.g. an image that is recorded on a light-sensitive film material such as radiographic film. The image is scanned in an opto-electronic scanning apparatus incorporating an opto-electrical sensor. such as a charge coupled device sensor (CCD sensor).

In a line-wise scanning apparatus incorporating an opto-electrical array sensor, each line of an image to be scanned is illuminated in sequence and the image-wise transmitted or reflected light is directed onto the light-sensitive array sensor. According to the characteristics of the sensor, the integrated radiation is converted into a corresponding electrical representation of the scanned image. The electrical representation is read out and either stored in a memory device or fed into an opto-electronic image reproducing device, such as a laser recorder, or applied to an electronic signal processing device.

The images that are scanned and converted into an electrical representation may be composed of pixels that have densities within an extended density range. Usually an image is scanned by a light-source illuminating each pixel with an equal amount of light. The image-wise reflected or transmitted light hence occupies an extended intensity range.

The operational range of available opto-electrical semi-conductor image sensors is limited by a maximum value of the integrated light intensity in excess of which the opto-electronic sensor becomes saturated The operational range is further limited by a minimum value of the integrated light intensity below which the electrical signal in correspondence of the integrated light is no longer distinguishable from the noise value. Said operational range may be insufficient to cover the entire density range that may be measured on an exposed radiographic film.

Due to the linear relation of the irradiation of a charge coupled device array and the output signal in response of said irradiation, the charge coupled device sensors that are at present available do not provide (by directly using the measured output values), electrical representations of density values in the extended range from D = 0.002 to D = 3.0 that have adequate resolution for inspection by a human eye. The density values on exposed radiographic films are comprised in the above extended density range.

It is an object of the present invention to improve the density resolving power and to extend the light intensity detection range.

To achieve the above-mentioned objects, the present invention provides a method of digitizing an image that is scanned in an image scanning apparatus incorporating an opto-electrical sensor such as a charge coupled device sensor, and an electronic signal processing circuit by means of which an electrical representation of the image-wise modulated light is generated, characterised in that said image is repeatedly scanned with distinct irradiation amounts, each irradiation cycle providing an output value for each pixel; and that for a pixel said electrical representation is generated by taking into account the most accurate output value for said pixel and the irradiation amount that was required to obtain said output value; said most accurate output value for a pixel and said irradiation amount being such that optimal density resolution in said pixel is obtained.

The invention has the advantage that a given anti-blooming opto-electrical image sensor such as a charge coupled device sensor can be used for providing an electrical representation in correspondence with the image-wise modulated light which normally falls out of the operational range of said sensor.

The method of the present invention hence enlarges the operational range of the available opto-electrical sensors.

Important fields of use of the present invention are the digitization of radiographic images on light-sensitive film material, generally scanned in the transmission mode ( light is directed onto the film and image-wise modulated light is transmitted through the film and integrated by an opto-electrical sensor). Another field of application is the digitization of documents, e.g. paper documents that are generally scanned in the reflection mode.

In a preferred embodiment of the present invention, the amount of light that is directed onto a pixel is increased in successive irradiation cycles by a factor $2^N$, N being a positive integer, relative to the previous step. Therefore the irradiation period of the light-source and also the integration period of the charge coupled device array sensor are augmented during subsequent irradiation cycles by a power of 2.

This embodiment is preferred because of the simplicity of the signal processing that is to be exerted in order to obtain the adjusted digital output value in every pixel of a scanned line.

Multiplication of the amount of light that is directed to a document to be scanned with a factor $2^N$ implements an increment of the detection range by $2^N$.

Hence an electrical representation that is achieved as the result of a certain illumination step is to be multiplied by $2^N$ in order to refer to the same detection range as an electrical representation that is obtained in the next illumination step - (the amount of light being augmented by $2^N$).

It will be clear to a person skilled in the electronic art that the precision of the electrical representation obtained in a certain step is increased by N bits relative to the result of the previous step.

This embodiment is preferred because it lends itself extremely well for the purpose of digital signal processing and calculation of an optimal digital representation of an image.

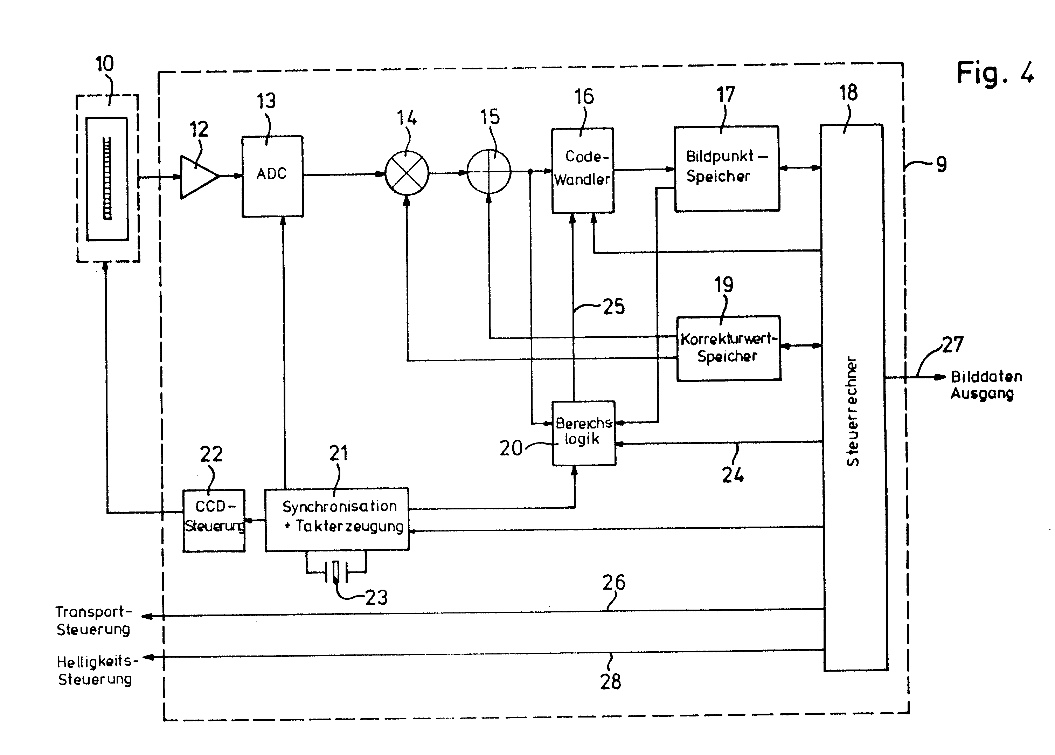

A detailed explanation of the signal processing is described in relation to figures 4, 5 and 6.

The following explanation relates to a particular embodiment of the method of the present invention wherein an image is scanned in a line-wise opto-electronic scanning apparatus. The amount of light that is directed towards a line is doubled in each irradiating step relative to the previous irradiating step. Therefore the irradiation period is doubled in successive steps.

First each line of an image to be scanned is illuminated by an identical amount of light towards each pixel of the image. The output of the light-source is controlled such that the sensor is not saturated in any pixel.

The image-wise modulated light is accumulated in the electro-optical sensor during an integration period $t_1$. An electrical representation is obtained corresponding with the accumulated radiation.

During a second irradiation step the irradiation period is doubled so as to accumulate a larger amount of radiation in the sensor.

In those locations, having low density and therefore transmitting or reflecting an amount of radiation that causes the transducer to saturate, the electrical representation obtained during the previous irradiation step (integration time $t_1$) is doubled whereas in the locations in which the sensor is not saturated a new output signal of the sensor is obtained. Since in those pixels the sensor is not yet saturated, it is possible to add at least another additional irradiation step in which the irradiation period is doubled relative to the previous one.

For example in a third irradiation step, pixels are irradiated during a period that is twice the irradiation period of the previous step. For those pixels in which the sensor is saturated in the step in progress or was already saturated, the electrical representation obtained in the preceding step is doubled whereas in another pixel a new output value of the sensor is achieved.

Alternatively, the amount of light in successive irradiating steps can be doubled by doubling the emitted intensity during successive steps instead of doubling the irradiating period and the corresponding exposure period of the light-sensitive sensor.

The level above which an electrical representation in a pixel is replaced by the electrical representation obtained in the previous step multiplied by a factor 2, can be any preset value that does not exceed the electrical value corresponding with the sensor saturation level.

For a better understanding of the present invention reference is made to the following description given by way of example in connection with the accompanying drawings, in which

Fig. 1 shows the relation of the signal-to-noise ratio of the output signal of a charge coupled device array and the image density,

Fig. 2 shows the relation of the signal-to-noise ratio of the output of a charge coupled device array and the image density in a particular embodiment of the method of the present invention,

Fig. 3 schematically shows the composition of an opto-electrical image scanning and digitizing apparatus,

Fig. 4 is a particular embodiment of a signal processing circuit in accordance with the present invention,

Fig. 5 schematically shows another embodiment of a signal processing circuit for generating comparable electrical representations in each pixel,

Fig. 6 represents a clock signal CLOCK 1 for the timing of the motor that drives the light-emitting means past the image to be scanned, and represents a clock signal CLOCK 2 for timing the successive irradiations of a single line,

Fig. 7 represents the smallest detectable density difference as a function of the image density.

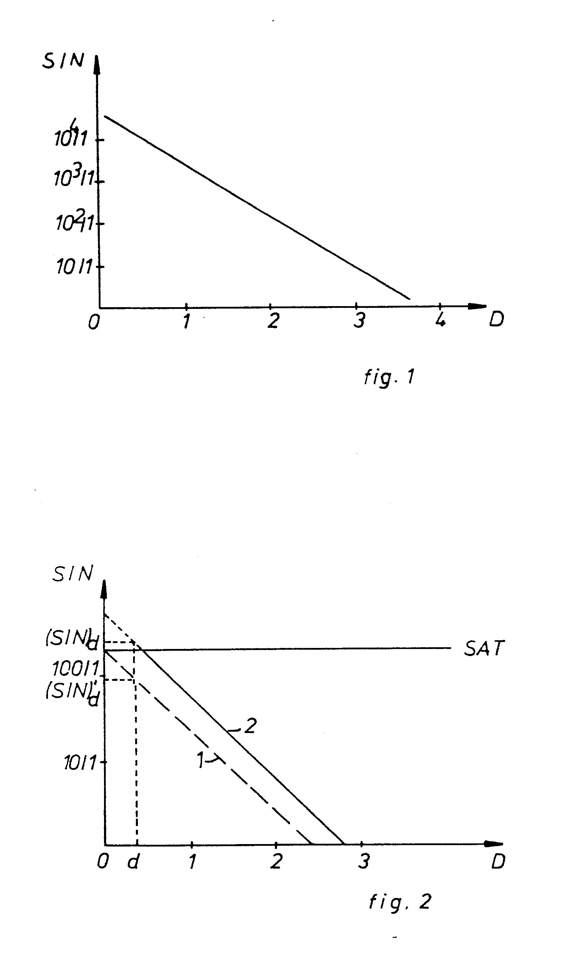

Figure 1 is a curve representing the signal-to-noise ratio of the output signal of a charge coupled device in response of image-wise modulated light versus the image density.

An image is scanned by a light-source emitting an equal amount of light towards each pixel. The image-wise modulated light is integrated by an array of charge coupled devices and converted into an electrical representation.

This figure illustrates that the signal-to-noise ratio is inversely proportional to the image density.

An optimal signal-to-noise ratio of the output signal of a charge coupled device sensor can hence be obtained by increasing the light intensity that is directed towards high density pixels of an image or by increasing the illumination period of high density pixels relative to the illumination period of low density pixels.

In order to obtain an electrical representation for each pixel that can be compared inter se, the output values of the sensor, are to be converted taking into account the duration or the intensity of the underlying illumination.

The enhancement of the light intensity or the illumination period in order to achieve an optimal electrical representation of an image, is limited by the saturation level of the opto-electrical sensor.

Figure 2 illustrates said enhancement. For illustrative purposes the following explanation relates to a particular embodiment of the preset invention in which two irradiation steps are performed in succession, the amount of light that is emitted during the second irradiation step being doubled relative· to the first step.

The electrical representation of an image is e.g. obtained through line-wise scanning of said image by means of a line source illuminator. A charge coupled device array is exposed to the image-wise modulated light during an integration period $t_1$ equal to 0.5 msec. The corresponding electrical representation is shift out of the charge coupled device array and is converted into a digital representation in an analogue-to-digital convertor. The detected density in each pixel is represented by one of 256 intensity levels into which the analogue output of the charge coupled device array is converted using an 8 bit analogue-to-digital converter (ADC).

The dashed line 1 on figure 2 illustrates the signal-to-noise ratio of the output signal of the ADC when the charge coupled device array is exposed to the image-wise modulated light during an exposure period $t_1$.

The image is scanned a second time. The amount of light that is directed towards each pixel is doubled relative to the amount of light that was emitted during the previous step. Thereto the irradiation period and corresponding integration period of the sensor are doubled.

The signal-to-noise ratio versus the image density is represented by the drawn line 2.

If in a pixel the accumulated light causes the sensor to saturate, the corresponding output signal is incorrect. The saturation level is the limit in excess of which a detected value is replaced by a computed value obtained by doubling the electrical value resulting from the previous step.

In order to provide an explanatory example of this method, saturation of the sensor is assumed when it is exposed to the light reflected by a pixel having a density "d". In this figure the horizontal line SAT delimits the level above which the sensor becomes saturated. The output of the transducer in said pixel will be incorrect, the signal-to-noise ratio $(S/N)_d$ represented in figure ·2 consequently is also incorrect.

This incorrect value is replaced by the output value of the light sensitive sensor in the previous step multiplied by two ( in order to get comparable electrical values).

The corresponding signal-to-noise ratio is enhanced and is equal to $(S/N)'_d$.

The invention comprises an opto-electrical image reading and digitizing apparatus in which electronic signal processing means are provided to generate an optimal electrical representation of an image that comprises densities which would normally fall out of the operational range of the used sensor.

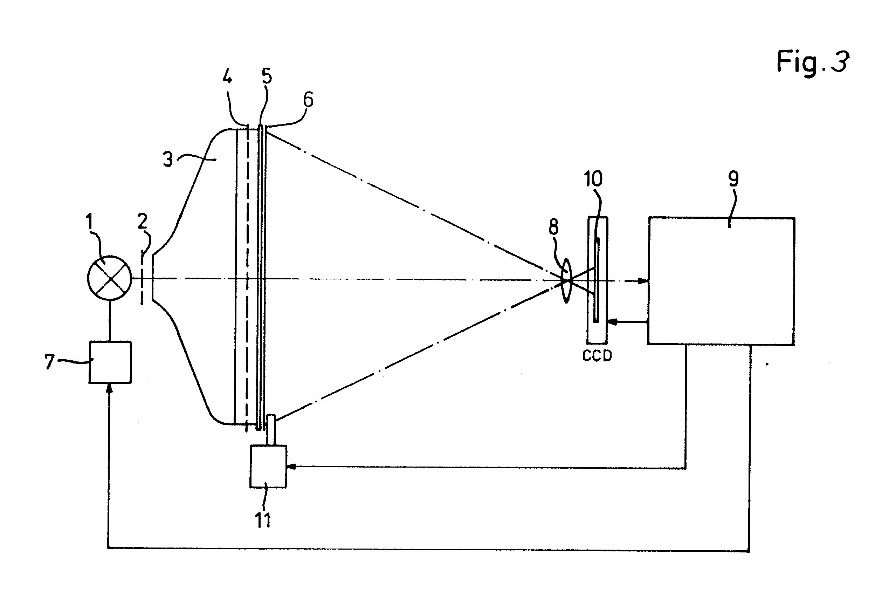

Figure 3 schematically represents a particulary embodiment of such an image reading apparatus wherein an image conveyed e.g. on a film material 6 is line-wise scanned. The light emitted by a light-source 1 is directed by means of a light guide member 3 through infrared filters 2 and 4 and through a light diffusing glass platen 5 onto an image to be scanned. The operation of the light-source is controlled by means of a control circuit 7. The intensity or operation period of the light-source is setable. The image-wise transmitted ( or reflected ) light is focused through a lens system 8 onto the light-sensitive area of a charge coupled device array sensor 10. The sensor is eventually provided with a heat sink (or cooling elements such as Peltierelements) in order to decrease the noise that might be added due to the dark current of the charge coupled device array. These provisions are not shown in the figure.

The operation of the charge coupled device array and the processing of the output signal of the charge coupled device array is controlled by another electronic signal processing circuit 9. This circuit likewise controls the transport of the document or film material conveying the image in a transport unit 11 as well as the irradiation intensity or the irradiation period of each line. The transport unit provides that successive lines of an image to be scanned are illuminated in sequence.

It will be obvious that a relative movement of the light-source and the illumination means can likewise be obtained by transporting the light-source past a stationary image supporting means.

The illumination means can e.g. be an array of light-emitting diodes extending over the subscanning direction and being transported past the image bearing support in the scanning direction.

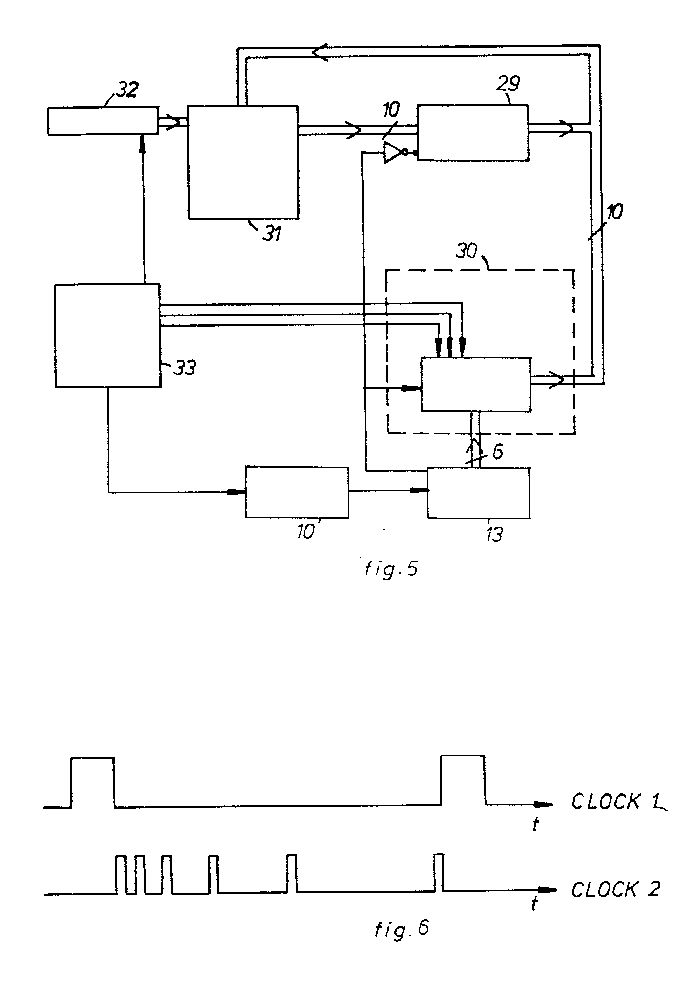

A particular embodiment of an electronic processing circuit 9 of figure 3 is furtheron described in detail with reference to figure 6.

The output signal in correspondence of the amount of light that has been integrated in the charge coupled device array is fed into a sample-and-hold circuit 12 and converted into a digital representation by an analogue-to-digital converter 13.

The digital signal is applied to a correction circuit that corrects for several kinds of non-uniformities such as non-uniform sensitivity of the individual elements of the charge coupled device array and non-uniform illumination. The correction circuit comprises a multiplier 14 and an adder 15.

The correction values are read out of a storage device 19 that stores a multiplicative and an additive correction value for each element of the charge coupled device array.

These correction values are determined on the basis of two reference scans, one is performed at full brightness (zero density), the other with a covered sensor (dark condition).

The digital values are applied to a conversion circuit 16 that converts the input values by means of a conversion table into output digital values that are stored into an image memory 17. This image memory has at least enough capacity for storing the information in correspondence of a single scanned line.

Conversion circuit 16 may e.g. receive the data relating to the conversion table from processor 18.

The timing of the charge coupled device array is controlled by means of a CCD controlling circuit 22. Controlling circuit 22 is fed with a clock signal that is obtained by clock signal generating circuit 21. Said clock generating circuit is fed with a cristal generated clock signal. The quartz-cristal is denoted by numeral 23.

A logic circuit 20 is added for the purpose of selecting for each pixel the output value that has the largest numerical value but does not saturate the image sensor. Said value is selected out of the series of CCD output values resulting from repeated irradiation of the image in accordance with the present invention. Said selection is explained hereinbelow with reference to an example wherein a line is twice irradiated and wherein the irradiation amount is increases in the second irradiation cycle relative to the first.

Under control of a microprocessor 18 (control signals are applied to the logic unit 20 via a data line 24) the electrical values representing the pixels of one line are after the first exposure fed into a memory device 17.

The irradiation period of the light-source is set at such a value that the sensor does not become saturated in any pixel.

After the first exposure the final electrical representation can be read out of the image sensor for pixels of lowest density. Another irradiation with an extended irradiation period would cause saturation of the image sensor.

The same line is a second time irradiated in accordance with the present invention. The processor 18 commands timing circuit 21 to set an extended integration period of the charge coupled device array and commands the logic circuit to start comparison of the pixel representations.

In the logic circuit the actual electrical representation of each pixel and the representation obtained in the previous irradiation cycle are compared. Therefore the latter is read out of the image storage device.

As a result of the extended integration period the electrical representations are obtained for the high density pixels. The sensor is, however, saturated in low density pixels. The logic circuit recognises these saturated output values and does not store the new values in the storage device. For those pixels, the representations that were obtained in the irradiation cycle preceding saturation are retained.

Control line 25 from the logic circuit 20 to the conversion circuit 16 enable the logic circuit to provide that the detected values as well as indications on the integration period can be stored in memory device 17.

Alternatively, it is possible to convert the detected values either linearly or logaritmically by means of the look up table that has been loaded into conversion circuit 16 ( taking into account the integration period of the sensor ).

Processor 18 controls via line 26 the transport of the image conveying means relative to the irradiation means and the sensor. Processor 18 furthermore controls the optimal intensity of the light source within the sensitive range of the image sensor via line 28.

The computed data are provided at the data output 27 of the processor to be applied to image processing apparatus.

Another particular embodiment of an electronic circuit that can be used for generating electrical representations for each pixel is shown in figure 5.

Additional features (such as additive and multiplicative correction circuitry) are omitted in this figure to simplify the following explanation.

An analogue electrical representation of imagewise modulated light is obtained at the output of an image sensor 10 and is applied to an analogue-to-digital converter 13. A suitable light-sensitive sensor 10 comprises 2048 charge coupled device sensor elements arranged in an array. An image to be scanned is e.g. positioned on a transparent platen. A line-source illuminator is transported past the transparent platen so as to illuminate in sequence each line of the image. In the light of further explanation, a clock signal CLOCK 1 is represented in figure 6. The clock signal times the motor that drives the light emitting means past the platen on which the image to be scanned is positioned.

The analogue-to-digital converter converts the analogue electrical representation of an image into a 6 bit digital representation and additionally provides a supplementary bit, furtheron called the overflow bit, that gives information about the state of the light-sensitive sensor. This overflow bit is equal to one when the sensor is saturated in a pixel whereas it is equal to zero otherwise. According to the value of the compare bit either the word shifter 30 ( overflow bit equal to 0) or buffer 29 ( overflow bit equal to one ) is selected.

The device furthermore comprises a random access memory RAM 31 having 2048 $\times$ 10 bit memory locations that can be selected by generation of the appropriate addresses. The addresses are selected by counter 32. Initially RAM 31 is filled with 2048 ten bit words. These words have all bits equal to one.

Figure 6 furthermore represents the clock signal CLOCK 2 to time the successive irradiations of each line of the image. In between two successive clock pulses of clock signal CLOCK 1 a series of irradiation steps and corresponding sensor exposure steps are performed. As is illustrated by figure 6, in the described embodiment successive irradiation steps are characterised by a doubled duration.

At the first clock pulse of CLOCK 2, generated by clock generator 33, the digital representation of the reflected light in a first pixel is applied to the word shifter 30. At the same time a first 10 bit word is read out of RAM 31. If at that time the overflow bit is equal to zero, the 6 bits of the digital representation are written in the place of the 6 most significant bits of the 10 bit word that was read out of the RAM, the 4 least significant bits are set to zero and the new word is again written into RAM 31.

This procedure is repeated for the other 6 bit words corresponding with the amount of light that was integrated by the sensor in each pixel.

Next, at the second clock pulse of CLOCK 2, the same line on the image is illuminated. The irradiation period and hence also the period during which the sensor is exposed to reflected light is doubled with reference to the previous one.

A digital representation corresponding with the image-wise modulated light in each pixel is obtained in the same way as is previously described. The digital representation in each pixel is applied to the word shifter. However, in this cycle the feeding of a 6 bit word into the word shifter is followed by the generation of a new word that is built by the most significant bit set to zero, followed by the 6 bits of the digital representation and completed by 3 least significant bits set to zero. If at that time the overflow bit is equal to zero, this new word is again written into RAM 31.

In the third cycle the same procedure is followed. The new word, however is formed by the two most significant bits of the 10 bit word set to zero, followed by the 6 new bits and completed by the two least significant bits equal to zero.

The fourth and fifth cycle are analogous.

In the fifth and last cycle a word is formed that is composed by four most significant bits set to zero and six new bits.

Word shifter 30 is a PAL device - (programmable array logic). Three bits that are generated by clock generator 33 are fed into word shifter 30 in order to provide an indication of which cycle is in progress.

When illumination of a pixel causes sensor saturation, the analogue-to-digital converter generates an overflow bit equal to one thereby selecting buffer 29. The 10 bit word that is at that time read out of the RAM was obtained in one of the previous cycles and is applied to buffer 29 without being amended.

When the procedure is applied for each pixel in one line, the line source illuminator is transported to the next line. This action is timed by clock signal CLOCK 1, represented in figure 6.

It is to be understood that, although the device according to this invention is explained in detail for a case wherein the integration and irradiation period is doubled in successive cycles, it could be used in general when the illumination and corresponding accumulation period is during successive cycles multiplied by a factor $2^N$, N being a positive integer by generating an appropriate clock signal. Consequently the electrical representation is to be shifted to the right an appropriate number of times and is to be completed by bits equal to zero in order to form the corresponding new words.

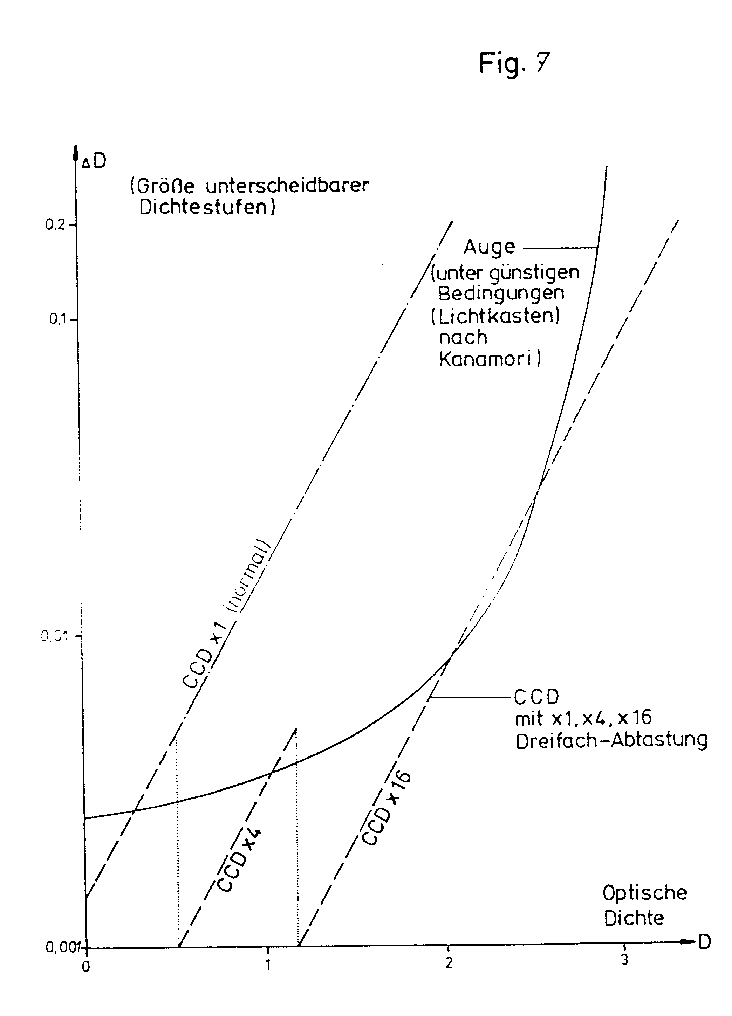

In figure 7 the dashed line represents the smallest detectable density difference as a function of the density measured on a film material and represented in a semi-logarithmic coordinate system. The curved plain line represents the minor density variations that can be discriminated in optimal reading conditions by a human eye (disclosed by Kanamori).

The plain lines denoted by CCD $\times$ 1, CCD $\times$ 4 and CCD $\times$ 16 represent the smallest detectable density difference as a function of the image density as has been measured on an image that was three times scanned, the illumination period and corresponding integration period of the sensor being multiplied by 4 in the second illumination relative to the first illumination, and multiplied by 16 during the third illumination step.

The line denoted by CCD ˣ 1 represents the smallest detectable density difference versus the image density as would be obtained by applying the prior art method.

According to a particular embodiment of the method of the present invention, the signal processing circuit selects, in order to generate the digital representation of a pixel, the measurement result on the curve in correspondence with the largest integration period of the sensor. In case of sensor saturation, the measurement result obtained in the previous illumination cycle is selected.

## Claims

1. A method of digitizing an image that is scanned in an image scanning apparatus incorporating an opto-electrical sensor such as a charge coupled device sensor, and an electronic signal processing circuit by means of which an electrical representation of the image-wise modulated light is generated, characterised in that said image is repeatedly scanned with distinct irradiation amounts, each irradiation cycle providing an output value for each pixel; and that for a pixel said electrical representation is generated by taking into account the most accurate output value for said pixel and the irradiation amount that was required to obtain said output value; said most accurate output value for a pixel and said irradiation amount being such that optimal density resolution in said pixel is obtained.

2. A method according to claim 1 wherein said distinct irradiation amounts are obtained by adapting the irradiation intensity.

3. A method according to claim 1 wherein said distinct irradiation amounts are obtained by adapting the irradiation period and wherein integration period of said opto-electrical sensor is accordingly adapted.

4. A method according to any preceding claim wherein said distinct irradiation amounts increase in successive irradiation cycles with a factor $2^N$, N being a positive integer.

5. An electro-optical image reading and digitizing apparatus incorporating an opto-electrical sensor such as a charge coupled device sensor, image illuminating means, clock signal generating means generating a first clock signal for timing irradiation of said image, and generating a second clock signal for timing the irradiation period, and an electronic signal processing circuit by means of which an electrical representation of the image-wise modulated light is generated characterised in that said image is repeatedly scanned with distinct irradiation amounts, each irradiation cycle providing an output value for each pixel; and that for a pixel said electrical representation is generated by taking into account the most accurate output value for said pixel and the irradiation amount that was required to obtain said output value; said most accurate output value for a pixel and said irradiation amount being such that optimal density resolution in said pixel is obtained.

fig. 1

fig. 2

Fig. 3

Fig. 4

fig.5

fig.6

Fig. 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | PATENTS ABSTRACTS OF JAPAN, vol. 5, no. 186 (E-84)[858], 25th November 1981; & JP-A-56 112 180 (FUJI XEROX K.K.) 04-09-1981 --- | 1,3,5 | H 04 N 1/40 |
| A | PATENTS ABSTRACTS OF JAPAN, vol. 5, no. 192 (E-85)[864], 8th December 1981; & JP-A-56 114 475 (FUJI XEROX K.K.) 09-09-1981 --- | 1,2,5 | |
| A | EP-A-0 071 005 (IBM) * Page 9, paragraph 4 - page 10, paragraph 1; page 13, paragraph 3 - page 17, line 6 * --- | 1-5 | |
| A | EP-A-0 150 847 (SHARP) * Page 1, paragraph 2 - page 2, last lin * --- | 3 | TECHNICAL FIELDS SEARCHED (Int. Cl.4) |
| A | EP-A-0 158 288 (SHARP) * Page 4, line 17 - page 5, line 2 * ----- | 2 | H 04 N |

The present search report has been drawn up for all claims

| Place of search | Date of completion of the search | Examiner |
|---|---|---|
| THE HAGUE | 26-02-1987 | DE ROECK A.F.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82